# EUROPÄISCHE PATENTSCHRIFT

(11) **EP 2 255 083 B1**
(45) Veröffentlichungstag und Bekanntmachung des Hinweises auf die Patenterteilung: **20.07.2011**
(21) Anmeldenummer: 08872561.9
(22) Anmeldetag: 19.11.2008
(51) Int. Cl.: F02M 47/02, F02M 63/00

(54) **VERFAHREN ZUR ADAPTION VON MECHANISCHEN TOLERANZEN EINES GEBERRADS**
METHOD FOR ADAPTING MECHANICAL TOLERANCES OF A TIMING WHEEL
PROCÉDÉ POUR L'ADAPTATION DE TOLÉRANCES MÉCANIQUES D'UNE ROUE DE DÉTECTION

(30) Priorität: 20.02.2008 DE 102008010102
(43) Veröffentlichungstag der Anmeldung: 01.12.2010
(73) Patentinhaber: Robert Bosch GmbH, 70442 Stuttgart (DE)
(72) Erfinder: ROTH, Andreas, 75417 Muehlacker-Lomersheim (DE); HUBER, Armin, 73760 Ostfildern (DE); BOETTCHER, Jens, 71701 Schwieberdingen (DE)
(86) Internationale Anmeldenummer: PCT/EP2008/065836
(87) Internationale Veröffentlichungsnummer: WO 2009/103367

(56) Entgegenhaltungen:
- EP-A- 1 757 946
- EP-A1- 1 961 952
- EP-A2- 2 105 607
- WO-A1-87/05662
- DE-A1- 4 406 606
- DE-A1-102007 031 552
- US-A1- 2007 191 181
- US-A1- 2009 206 184

## Beschreibung

Die Erfindung betrifft ein Verfahren zur Adaption von mechanischen Toleranzen eines Geberrads einer Sensoreinrichtung einer Brennkraftmaschine eines Hybridantriebs eines Fahrzeugs nach Oberbegriff des Anspruchs 1.

### Stand der Technik

Es ist bekannt, zur Erfassung einer bestimmten Stellung einer Welle, beispielsweise der Kurbelwelle oder der Nockenwelle einer Brennkraftmaschine, eine Geberscheibe abzutasten, an deren Oberflächen Markierungen angebracht sind, und die an der betreffenden Welle drehfest angeordnet ist. Die Abtastung erfolgt beispielsweise mit einem induktiven Aufnehmer oder etwa mit einem Hall-Sensor, in den durch die vorbeilaufenden Markierungen Spannungsimpulse induziert werden und die in einer angeschlossenen Auswerteschaltung beziehungsweise einem angeschlossenem Steuergerät verarbeitet werden, wobei aus den zeitlichen Abständen der Spannungsimpulse die Drehzahl der Welle berechnet wird. Diese bekannten Einrichtungen haben den Nachteil, dass die Winkelmarken entweder sehr exakt ausgeführt sein müssen, so dass die Abstände zwischen gleichartigen Winkelmarkenflanken sehr genau sind, oder dass die Festlegung der Drehzahl nur ungenau erfolgen kann.

Aus der WO 93/07497 ist daher ein Verfahren bekannt, um mechanische Toleranzen eines solchen Geberrades, also Ungleichförmigkeiten in den Abständen der Winkelmarken, zu adaptieren. Hierzu wird in einem Schubbetrieb, insbesondere im Schubabschaltebetrieb, einer Brennkraftmaschine des Kraftfahrzeugs eine Adaption vorgenommen, indem bei erkanntem Schubbetrieb das zweite und die folgenden Zeitintervalle zum ersten Zeitintervall, wie sie vom Geberrad aufgenommen werden, zueinander in Bezug gesetzt werden.

Daran ist nachteilig, dass dieses Verfahren nur bei konventionellen Brennkraftmaschinen Anwendung finden kann, da hierzu ein Schubabschaltebetrieb der Brennkraftmaschine erforderlich ist. Ein solcher kommt bei Hybridfahrzeugen sehr viel seltener vor. Es kann insoweit relativ lange dauern, bis eine derartige Adaption durchgeführt werden kann; in der Zwischenzeit können unadaptierte Zustände auftreten.

Aufgabe der Erfindung ist es, eine solche Adaption mechanischer Toleranzen des Geberrades auch außerhalb von Schubabschaltphasen der Brennkraftmaschine bereitzustellen.

### Offenbarung der Erfindung

Hierzu wird ein Verfahren vorgeschlagen zur Adaption von mechanischen Toleranzen eines Geberrad einer Sensoreinrichtung einer Brennkraftmaschine eines Hybridantriebs eines Fahrzeugs, wobei der Hybridantrieb zusätzlich zur Brennkraftmaschine mindestens einen zweiten Motor, insbesondere Elektromotor, aufweist und während eines Adaptionsbetriebs die Brennkraftmaschine in einer gewünschten Betriebsart betrieben wird. Es ist vorgesehen, dass die gewünschte Betriebsart derart durchgeführt wird, dass mittels des zweiten Motors, insbesondere Elektromotors, die Brennkraftmaschine angetrieben und dabei der Brennkraftmaschine kein Kraftstoff zugeführt wird. Anders als im Stand der Technik wird zur Adaption nicht die Betriebsart der Schubabschaltung verwendet. Es ist zwar möglich, auch einen Schubabschaltebetrieb zu verwenden, dies ist erfindungsgemäß jedoch nicht ausschließlich vorgesehen. Vielmehr ist allein erforderlich, dass die Brennkraftmaschine konstant betrieben wird, so dass das Geberrad eine konstante Drehzahl aufweist. Es muss hierbei sichergestellt werden, dass Einflüsse, die es eigentlich durch die zu adaptierende Vorrichtung zu entdecken gilt, beispielsweise Laufungleichheiten, die auf Zündaussetzer schließen lassen, ausgeschaltet werden. Aus diesem Grund wird die Brennkraftmaschine zur Durchführung der Adaption nicht aus eigener Kraft betrieben. Es muss demzufolge ein solcher Zustand herrschen, in dem, beispielsweise in einem geeigneten Fahrzustand, die Brennkraftmaschine bei abgestellter Benzinzufuhr weitergedreht wird. Dies ist beispielsweise dann der Fall, wenn die Brennkraftmaschine vom zweiten Motor des Hybridfahrzeugs angetrieben wird. Der Antrieb durch den zweiten Motor, insbesondere Elektromotor, gestattet es, eine gleichbleibende Drehzahl in die Brennkraftmaschine einzubringen. Werden demzufolge zeitliche Abweichungen der Periodenfolgen des Geberrades festgestellt, lässt sich darauf schließen, dass diese von Toleranzen des Geberrads herrühren, nicht von schwankender Drehzahl der Brennkraftmaschine. Ein solcher Betrieb ist beispielsweise im Stillstand des Fahrzeugs möglich, wenn Antriebsleistung für eine Fortbewegung des Fahrzeugs nicht abgefordert wird, beispielsweise beim Start des Fahrzeugs, in einem Stau oder in einer Werkstatt bei der Wartung. Besonders vorteilhaft lässt sich dieses Verfahren bereits bei Herstellung des Fahrzeugs, beispielsweise auf dem Produktionsband oder bei Verlassen des Produktionsbandes in einer abschließenden Testphase, durchführen. Maßgeblich ist allein, dass der elektrische Antrieb, insbesondere also der Elektromotor des Hybridantriebs, den nicht befeuerten Verbrennungsmotor mitschleppen kann. Die Adaption kann hierbei durch beispielsweise programmierte Abrufe erfolgen, oder auch durch einen gezielten Testeraufruf, also durch menschlichen Einfluss.

In einer weiteren, bevorzugten Verfahrensausbildung ist vorgesehen, dass während der gewählten Betriebsart der zweite Motor, insbesondere Elektromotor, das Fahrzeug antreibt. Ein solcher geeigneter Fahrzustand ist dann gegeben, wenn Fahren mit diesem zweiten Motor möglich ist und der zweite Motor ausreichend Momentenreserve hat, um neben der Erfüllung des Fahrerwunsches zusätzlich den nicht befeuerten Verbrennungsmotor mitschleppen zu können. Die Brennkraftmaschine wird hierbei also zusätzlich zu den vom Fahrer gewünschten Fahrleistungen, die der zweite Motor des Hybridantriebs zu erbringen hat, mitangetrieben.

In einer bevorzugten Ausbildung des Verfahrens wird das Geberrad von der Kurbelwelle der Brennkraftmaschine angetrieben. Derartige Geberräder werden bevorzugt von Kurbelwellen angetrieben, beispielsweise durch eine direkte Ankopplung und drehfeste Verbindung mit der Kurbelwelle.

In einer weiteren Verfahrensausbildung ist vorgesehen, dass ein Geberrad mit mindestens einen, einer berührungslosen Abtastung mittels eines Sensors einer Sensoreinrichtung dienenden Segment verwendet wird. Das Geberrad weist demzufolge mindestens ein Segment auf, das über den zyklischen Umlauf des Geberrads berührungslos von einem Sensor einer Sensoreinrichtung abgetastet wird. Drehungleichförmigkeiten werden hierbei als Änderung der Periodendauer erfasst und ausgewertet, wie aus dem zitierten Stand der Technik bekannt.

Weiter wird eine Vorrichtung zur Ausführung einer Adaption von mechanischen Toleranzen eines Geberrads einer Sensoreinrichtung einer Brennkraftmaschine eines Hybridantriebs eines Fahrzeugs vorgeschlagen, wobei der Hybridantrieb zusätzlich zur Brennkraftmaschine mindestens einen zweiten Motor, insbesondere Elektromotor, aufweist, und wobei während eines Adaptionsbetriebs die Brennkraftmaschine in einer gewünschten Betriebsart betrieben wird. Hierbei ist vorgesehen, dass die Vorrichtung eine Steuerelektronik zur Betriebsart Erkennung und Betriebsart Auswahl zur Einleitung und Ausführung des Verfahrens zur Adaption, insbesondere wie bereits vorstehend beschrieben, aufweist. Die Adaption wird demzufolge abhängig vom Vorliegen der gewünschten Betriebsart der Brennkraftmaschine eingeleitet, wozu die Steuerelektronik die jeweils vorliegende Betriebsart Erkennung und Abhängig vom Ergebnis dieser Betriebsart Erkennung eine bestimmte Betriebsart auswählt, um das Verfahren zur Adaption einzuleiten. Insbesondere nämlich dann, wenn brennkraftmaschinenbedingte Laufungleichheiten ausgeschlossen werden können, ist eine zuverlässige Adaption des Geberrads möglich, wie bereits vorstehend beschrieben. Hierzu wird bei Vorliegen von bestimmten Betriebsarten, insbesondere beispielsweise abhängig von Lastzuständen, ein Zustand der Brennkraftmaschine hergestellt, in dem die Adaption frei von brennkraftmaschinenbedingten Laufungleichheiten ausgeführt werden kann, erkannte Laufungleichheiten demzufolge tatsächlich auch zu adaptierende Ungenauigkeiten oder Abweichungen des Geberrades zurückzuführen sind.

In einer bevorzugten Ausführungsform ist diese Steuerelektronik in der Motor- und/oder Fahrzeugsteuerelektronik integriert oder dieser zugeordnet. Insbesondere kommt eine Anordnung im Zusammenhang mit bekannten Steuergeräten als besonders vorteilhaft in Betracht, besonders bevorzugt wird die Steuerelektronik in einem solchen Steuergerät ausgeführt.

In einer weiteren, bevorzugten Ausführungsform weist die Steuerelektronik mindestens eine Schnittstelle zur Interaktion mit einem Bediener und/oder mindestens einer Testvorrichtung auf. Durch diese Schnittstellen kann die Adaption des Geberrades gewillkürt durchgeführt werden, insbesondere auf Bedieneranforderung, beispielsweise durch den Fahrer oder durch Servicepersonal. Die Schnittstelle kann daneben auch mindestens einer Testvorrichtung vorgesehen sein, insbesondere zu einer solchen, die zur Auswertung von Fehlerzuständen des Fahrzeugs verwendet wird, beispielsweise Diagnosecomputer.

In einer weiteren, besonders bevorzugten Ausführungsform weist die Vorrichtung eine Antriebskupplung auf, die den mit dem Geberrad drehfest verbundenen Motor von dem zweiten Motor, insbesondere Elektromotor, antreibbar macht.

Unter Antriebskupplung wird hier eine nicht zwingend, aber vorteilhaft lösbare, drehfeste Verbindung zwischen dem Motor und dem zweiten Motor, insbesondere Elektromotor, verstanden, die es ermöglicht, den Motor immer dann, wenn er nicht aus eigener Kraft betrieben wird, von dem zweiten Motor, insbesondere Elektromotor, antreiben zu lassen. Der zweite Motor übernimmt hierbei also über die Antriebskupplung den Antrieb des Motors, der selbst nicht in Betrieb ist, also insbesondere nicht mit Kraftstoff versorgt und nicht gezündet wird. Durch diese Antriebskupplung kann sichergestellt werden, dass der zweite Motor den Motor nur dann antreibt, wenn die Adaption durchgeführt werden soll; wird beim Betrieb beispielsweise nur mit dem zweiten Motor die Fortbewegung des Fahrzeugs bewirkt, ist es nämlich nicht erforderlich, den nicht angetriebenen Motor mitzudrehen, da dies eine unnötige Energieaufwendung bedeuten würde. Ein solches Mitantreiben des Motors durch den zweiten Motor findet demzufolge immer nur dann statt, wenn die Adaption, wie vorstehend beschrieben, durchgeführt werden soll. Selbstverständlich sind Ausführungsformen denkbar, in denen die Antriebskupplung starr, also nicht lösbar ausgebildet ist. Diese sind für leicht durchzudrehende Motoren und für einfachere Anwendungen unter bestimmten Bedingungen durchaus genügend.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand eines Verfahrensablaufdiagramms näher erläutert.

Es zeigen die
- Figur 1: einen Verfahrensablauf einer fuel-off-Adaption und
- Figur 2: eine Vorrichtung zur Ausführung des Verfahrens.

### Ausführungsform(en) der Erfindung

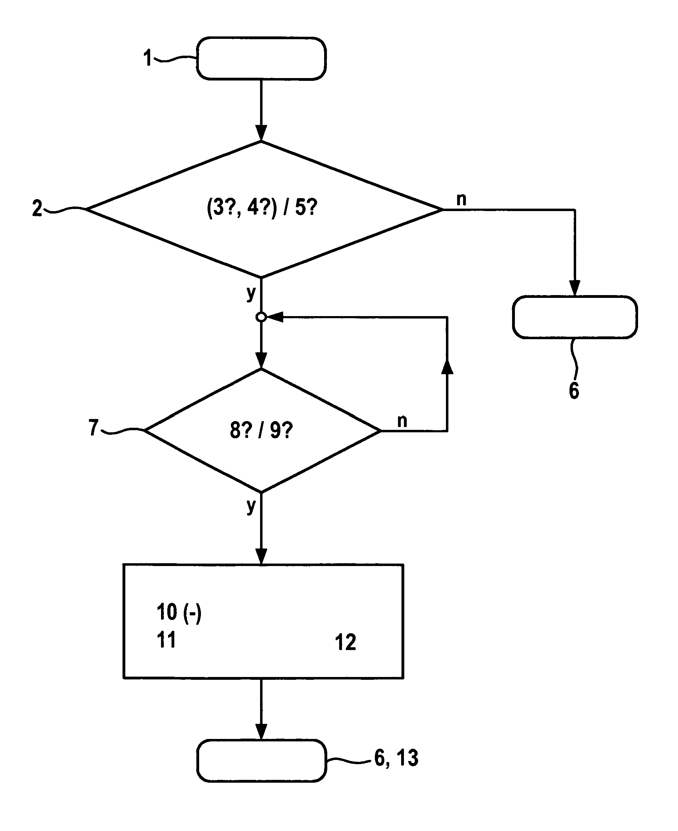

Figur 1 zeigt eine beispielhafte Ausgestaltung eines Verfahrens zur Adaption von mechanischen Toleranzen eines Geberrads einer Sensoreinrichtung einer Brennkraftmaschine mit Hybridantrieb, nämlich der Verfahrenseinleitung bei bestimmtem Fahrzustand. Nach einem Verfahrensstart 1 wird in einem Testschritt 2 darauf geprüft, ob eine Adaption des Geberrades als sogenannte fuel-off-Adaption 3 erforderlich ist, ob also eine Notwendigkeit 4 zur Adaption vorliegt, oder ob eine Testeranforderung 5 vorliegt, ob also eine gewillkürte Adaption, beispielsweise angefordert durch einen Servicetechniker oder durch den Fahrer selbst, gewünscht ist. Ist beides nicht der Fall, wird das Verfahren in einem Beendigungsschritt 6 beendet. Ist dies der Fall, wird in einem Fahrzustandsprüfschritt 7 geprüft, ob eine zur fuel-off-Adaption 3 geeignete Betriebsart 8, insbesondere ein geeigneter Fahrzustand 9 vorliegt. Ist dies nicht der Fall, wird zum Fahrzustandsprüfschritt 7 zurückverzweigt. Ist dies der Fall, wird die Einspritzung 10 der Brennkraftmaschine abgeschaltet und der Adaptionsalgorithmus 11 gestartet oder bei bereits abgeschalteter Einspritzung 10 der Adaptionsalgorithmus 11 gestartet. Es werden hierbei Erfassungs- und Auswerteschritte vorgenommen, wie sie beispielsweise aus dem Stand der Technik bekannt sind und daher nicht eigens erörtert werden. Prinzipiell wird bei bestehender Laufruhe (nämlich durch die Schwungmasse in Verbindung mit der Wirkung des Elektroantriebs) angenommen, dass sämtliche Intervalle zwischen äquidistanten Winkelmarken des Geberrades gleich groß sein müssten; eine hierbei gemessene Abweichung kann daher zu Korrekturzwecken der mechanischen Abweichungen, also der Adaption, für die Winkelmarken verwendet werden. Hierzu werden die Winkelmarken erfasst und deren Segmentabweichungen berechnet. Beispielsweise nach Ablauf einer Nockenwellenumdrehung, also nach Ablauf zweier Umdrehungen der Kurbelwelle, erfolgt dann die eigentliche Berechnung, wobei die Segmentabweichungen beispielsweise auf das erste Segment bezogen werden. Dieses eigentliche Adaptionsverfahren, insbesondere die mathematische Handhabung, ist bekannt und bedarf insoweit hier keiner weiteren Erläuterung. Es werden sodann die gewonnenen Werte in einem den Adaptionsalgorithmus 11 anwendenden Auswerte- und Speicherschritt 12 ausgewertet und in geeigneter Weise zur weiteren Verwendung gespeichert. Das Verfahren wird dann in einem Beendigungsschritt 6, nämlich dem Adaptionsbeendigungsschritt 13, beendet.

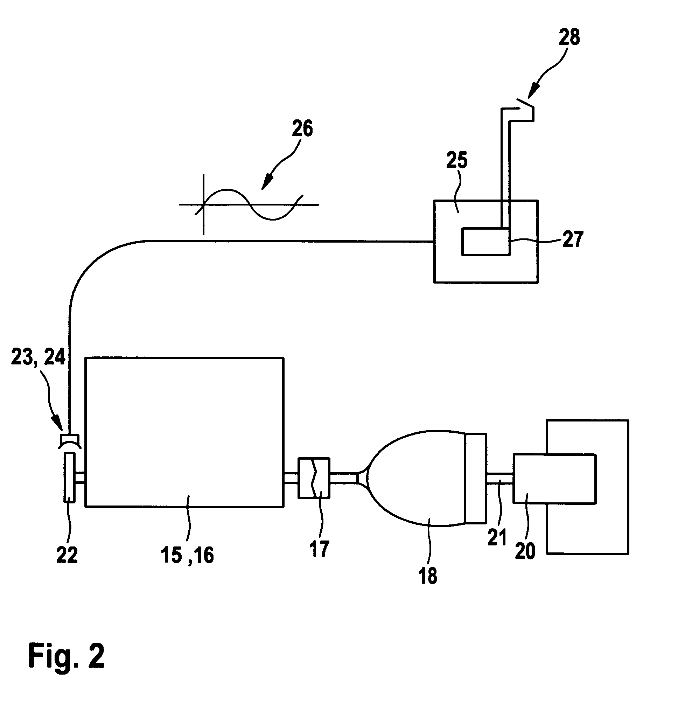

Figur 2 zeigt einen Hybridantrieb 14 eines nicht dargestellten Fahrzeugs, nämlich eines nicht dargestellten Kraftfahrzeugs. Der Hybridantrieb 14 weist einen Motor 15, nämlich einen Verbrennungsmotor 16 auf, der über eine lösbare Antriebskupplung 17 mit einem zweiten Motor 18, nämlich einem Elektromotor 19 drehfest verbindbar ist. Dem zweiten Motor 18 nachgeordnet ist in einem Antriebsstrang 21, der aus dem Motor 15, der Antriebskupplung 17 und dem zweiten Motor 18 besteht, ein Getriebe 20 zum Antreiben von nicht dargestellten Rädern des Fahrzeugs. Auf der dem zweiten Motor 18 gegenüberliegenden Seite des Motors 15 weist dieser in Verlängerung des Antriebsstrangs 21, beispielsweise in Verlängerung einer nicht dargestellten Kurbelwelle des Motors 15, ein mit dieser drehfest verbundenes Geberrad 22 sowie einen dem Geberrad 22 zugeordneten Aufnehmer 23 beispielsweise einen Hall-Sensor 24, auf, der mit einer Motor- und/oder Fahrzeugsteuerelektronik 25 zur Auswertung der von ihm aufgenommenen, die Drehung des Geberrads 22 beschreibenden lmpulsfolgen 26 elektronisch/elektrisch verbunden ist. Die Motor- und/oder Fahrzeugsteuerelektronik 25 ist mit weiteren, hier nicht dargestellten Bestandteilen insbesondere der Gemischaufbereitung, der elektrischen Steuereinrichtung und weiterer Fahrzeugeinrichtungen zur Steuerung und Regelung des Betriebs des Fahrzeugs und der Betriebszustände des Motors 15 und des zweiten Motors 18 elektrisch verbunden. Die Motor- und/oder Fahrzeugsteuerelektronik 25 weist hierbei eine Steuerelektronik 27 auf, die insbesondere in die Motor- und/oder Fahrzeugsteuerelektronik 25 integriert ist. Dieser angeschlossen und/oder der Motor- und/oder Fahrzeugsteuerelektronik 25 angeschlossen ist eine Schnittstelle 28, über die ein nicht dargestellter Bediener, beispielsweise Servicepersonal, das Verhalten der Steuerelektronik 27 und/oder der Motor- und/oder Fahrzeugsteuerelektronik 25 beeinflussen und/oder auswerten kann. Die Steuerelektronik 27 dient zur Erkennung von Betriebsarten sowie zur Betriebsartauswahl und zur Einleitung und Ausführung des vorstehend beschriebenen Verfahrens zur Adaption von Drehunförmigkeiten des Geberrads 22. Hierzu ist die Steuerelektronik 27 mit weiteren, hier nicht dargestellten Aufnehmern für Betriebszustände des nicht dargestellten Fahrzeugs wahlweise verbunden oder verbindbar; bevorzugt erkennt die Steuerelektronik 27 aus Daten der Motor- und/oder Fahrzeugsteuerelektronik 25 aber das Vorliegen geeigneter, das Verfahren erfordernder und/oder vom Bediener erwünschter Betriebsarten selbstständig. Wird über die Schnittstelle 28 beispielsweise eine Adaption angefordert, beispielsweise im Stillstand des Fahrzeugs im Servicefall, wird der zweite Motor 18 betrieben, wohingegen der Motor 15 abgeschaltet wird. Er wird folglich nicht mit Kraftstoff versorgt und nicht gezündet, sondern über die drehfest eingekuppelte Antriebskupplung 17 von dem zweiten Motor 18 durchgedreht. Der zweite Motor 18 ist hierbei bevorzugt als Elektromotor 19 ausgebildet, der eine gleichbleibende Drehzahl und ein gleichbleibendes Moment in den Motor 15 einbringt, so dass erkannte Drehungleichförmigkeiten als Ungleichförmigkeiten des Geberrads 22 interpretiert werden können, die zu adaptieren sind.

In anderen Bauformen kann selbstverständlich die Anordnung von zweitem Motor 18, Getriebe 20 und Motor 15 relativ zueinander anders erfolgen, insbesondere in Hinblick auf die Auskuppelbarkeit über die Antriebskupplung 17 und Verbindung zum restlichen Antriebsstrang 21.

## Patentansprüche

1. Verfahren zur Adaption von mechanischen Toleranzen eines Geberrads einer Sensoreinrichtung einer Brennkraftmaschine eines Hybridantriebs eines Fahrzeugs, wobei der Hybridantrieb zusätzlich zur Brennkraftmaschine mindestens einen zweiten Motor, insbesondere Elektromotor, aufweist und während eines Adaptionsbetriebs die Brennkraftmaschine in einer gewünschten Betriebsart betrieben wird, **dadurch gekennzeichnet, dass** die gewünschte Betriebsart derart durchgeführt wird, dass mittels des zweiten Motors, insbesondere Elektromotors, die Brennkraftmaschine angetrieben und dabei der Brennkraftmaschine kein Kraftstoff zugeführt wird.

2. Verfahren nach Anspruch 1, **dadurch gekennzeichnet, dass** während der gewünschten Betriebsart der zweite Motor, insbesondere Elektromotor, das Fahrzeug antreibt.

3. Verfahren nach einem der vorherigen Ansprüche, **dadurch gekennzeichnet, dass** das Geberrad von der Kurbelwelle der Brennkraftmaschine angetrieben wird.

4. Verfahren nach einem der vorherigen Ansprüche, **dadurch gekennzeichnet, dass** ein Geberrad mit mindestens einem, einer berührungslosen Abtastung mittels eines Sensors einer Sensoreinrichtung dienenden Segment verwendet wird.

5. Vorrichtung zur Ausführung einer Adaption von mechanischen Toleranzen eines Geberrads einer Sensoreinrichtung einer Brennkraftmaschine eines Hybridantriebs eines Fahrzeugs, wobei der Hybridantrieb zusätzlich zur Brennkraftmaschine mindestens einen zweiten Motor, insbesondere Elektromotor, aufweist, und wobei während eines Adaptionsbetriebs die Brennkraftmaschine in einer gewünschten Betriebsart betrieben wird, **gekennzeichnet durch** eine Steuerelektronik (27) zur Betriebsarterkennung und Betriebsartauswahl zur Einleitung und Ausführung des Verfahrens zur Adaption, insbesondere nach einem der vorstehend beschriebenen Verfahren.

6. Vorrichtung nach Anspruch 5, **dadurch gekennzeichnet, dass** die Steuerelektronik (27) in die Motor- und/oder Fahrzeugsteuerelektronik (25) integriert ist oder dieser zugeordnet ist.

7. Vorrichtung nach einem der vorhergehenden Ansprüche, **dadurch gekennzeichnet, dass** die Steuerelektronik (27) mindestens eine Schnittstelle (28) zur Interaktion mit einem Bediener und/oder mindestens einer Testvorrichtung aufweist.

8. Vorrichtung nach einem der vorhergehenden Ansprüche, **gekennzeichnet durch** eine Antriebskupplung (17), die den mit dem Geberrad (22) drehfest verbundenen Motor (15) von dem zweiten Motor (18), insbesondere Elektromotor (19), antreibbar macht.

## Claims

1. Method for adapting mechanical tolerances of a transmitter wheel of a sensor device of an internal combustion engine of a hybrid drive of a vehicle, the hybrid drive having, in addition to the internal combustion engine, at least one second motor, in particular an electric motor, and the internal combustion engine being operated in a desired operating mode during an adaptation operation, **characterized in that** the desired operating mode is carried out in such a way that the internal combustion engine is driven by means of the second motor, in particular the electric motor, and no fuel is fed to the internal combustion engine in the process.

2. Method according to Claim 1, **characterized in that** the second motor, in particular the electric motor, drives the vehicle during the desired operating mode.

3. Method according to one of the preceding claims, **characterized in that** the transmitter wheel is driven by the crankshaft of the internal combustion engine.

4. Method according to one of the preceding claims, **characterized in that** a transmitter wheel is used with at least one segment which serves for contactless sensing by means of a sensor of a sensor device.

5. Apparatus for carrying out an adaptation of mechanical tolerances of a transmitter wheel of a sensor device of an internal combustion engine of a hybrid drive of a vehicle, the hybrid drive having, in addition to the internal combustion engine, at least one second motor, in particular an electric motor, and the internal combustion engine being operated in a desired operating mode during an adaptation operation, **characterized by** control electronics (27) for operating-mode detection and operating-mode selection for initiating and carrying out the method for adaptation, in particular according to one of the methods described in the preceding text.

6. Apparatus according to Claim 5, **characterized in that** the control electronics (27) are integrated into the engine and/or vehicle control electronics (25) or are assigned to them.

7. Apparatus according to one of the preceding claims, **characterized in that** the control electronics (27) have at least one interface (28) for interaction with an operator and/or at least one test apparatus.

8. Apparatus according to one of the preceding claims, **characterized by** a drive clutch (17) which makes it possible for the engine (15) which is connected fixedly to the transmitter wheel (22) so as to rotate with it to be driven by the second motor (18), in particular the electric motor (19).

## Revendications

1. Procédé pour l'adaptation de tolérances mécaniques d'une roue de détection d'un système de capteur d'un moteur à combustion interne d'un entraînement hybride d'un véhicule, l'entraînement hybride présentant en plus du moteur à combustion interne au moins un deuxième moteur, notamment un moteur électrique, et pendant un mode d'adaptation, le moteur à combustion interne fonctionnant dans un mode souhaité, **caractérisé en ce que** le mode souhaité est mis en oeuvre de telle sorte qu'au moyen du deuxième moteur, notamment du moteur électrique, le moteur à combustion interne soit entraîné et qu'aucun carburant ne soit alimenté dans ce cas au moteur à combustion interne.

2. Procédé selon la revendication 1, **caractérisé en ce que** pendant le mode de fonctionnement souhaité, le deuxième moteur, en particulier le moteur électrique, entraîne le véhicule.

3. Procédé selon l'une quelconque des revendications précédentes, **caractérisé en ce que** la roue de détection est entraînée par le vilebrequin du moteur à combustion interne.

4. Procédé selon l'une quelconque des revendications précédentes, **caractérisé en ce qu'**une roue de détection est utilisée avec au moins un segment servant à un balayage sans contact au moyen d'un capteur d'un système de capteur.

5. Dispositif pour effectuer une adaptation de tolérances mécaniques d'une roue de détection d'un système de capteur d'un moteur à combustion interne d'un entraînement hybride d'un véhicule, dans lequel l'entraînement hybride présente en plus du moteur à combustion interne au moins un deuxième moteur, notamment un moteur électrique, et dans lequel, pendant un mode d'adaptation, le moteur à combustion interne fonctionne dans un mode de fonctionnement souhaité, **caractérisé par** une électronique de commande (27) pour reconnaître le mode de fonctionnement et sélectionner le mode de fonctionnement pour lancer et mettre en oeuvre le procédé pour l'adaptation, notamment selon l'un quelconque des procédés décrits ci-dessus.

6. Dispositif selon la revendication 5, **caractérisé en ce que** l'électronique de commande (27) est intégrée dans l'électronique de commande du moteur et/ou du véhicule (25) ou est associée à celle-ci.

7. Dispositif selon l'une quelconque des revendications précédentes, **caractérisé en ce que** l'électronique de commande (27) présente au moins une interface (28) pour l'interaction avec un utilisateur et/ou avec au moins un dispositif de test.

8. Dispositif selon l'une quelconque des revendications précédentes, **caractérisé par** un embrayage d'entraînement (17) qui permet au moteur (15) connecté de manière solidaire en rotation à la roue de détection (22) d'être entraîné par le deuxième moteur (18), en particulier le moteur électrique (19).
